# EUROPÄISCHE PATENTSCHRIFT

(11) **EP 2 550 327 B1**
(45) Veröffentlichungstag und Bekanntmachung des Hinweises auf die Patenterteilung: **03.05.2017**
(21) Anmeldenummer: 11709144.7
(22) Anmeldetag: 22.03.2011
(51) Int. Cl.: C08L 63/00

(54) **EPOXIDHARZZUSAMMENSETZUNG MIT VERRINGERTER TOXIZITÄT**
EPOXY RESIN COMPOSITION WITH REDUCED TOXICITY
COMPOSITION DE RÉSINE ÉPOXYDE À TOXICITÉ RÉDUITE

(30) Priorität: 23.03.2010 US 316476 P
(43) Veröffentlichungstag der Anmeldung: 30.01.2013
(73) Patentinhaber: Henkel AG & Co. KGaA, 40589 Düsseldorf (DE); Henkel IP & Holding GmbH, 40589 Düsseldorf (DE)
(72) Erfinder: WALTER, Pablo, 40221 Düsseldorf (DE); BENOMAR, Mustapha, 47137 Duisburg (DE); KREILING, Stefan, 69214 Eppelheim (DE); TROLL, Angelika, 40593 Düsseldorf (DE); SCHÖNFELD, Rainer, 40627 Düsseldorf (DE); WALSH, Timothy, Weymouth, Massachusetts 02188 (US)
(86) Internationale Anmeldenummer: PCT/EP2011/054332
(87) Internationale Veröffentlichungsnummer: WO 2011/117229

(56) Entgegenhaltungen:
- WO-A2-2005/028542
- US-A- 3 630 997
- US-A1- 2007 123 664
- DATABASE WPI Week 199038 Thomson Scientific, London, GB; AN 1990-287874 XP002661561, & JP 2 204506 A (KENSETSU SHO KANTO) 14. August 1990 (1990-08-14)
- DATABASE CA [Online] CHEMICAL ABSTRACTS SERVICE, COLUMBUS, OHIO, US; NANAUMI, KEN ET AL: "Self-bonding insulating varnishes for wires", XP002661562, gefunden im STN Database accession no. 1977:108098 & JP 51 137731 A (HITACHI, LTD., JAPAN; HITACHI CABLE, LTD.) 27. November 1976 (1976-11-27)

## Beschreibung

Die vorliegende Erfindung betrifft einen zweikomponentigen Klebstoff auf Basis eines speziellen Epoxidharzsystems. Das erfindungsgemäße Epoxidharzsystem ermöglicht es, ohne den Einsatz von Komponenten, die als toxisch, reizend oder sensibilisierend eingestuft sind und die nach europäischem Recht eine entsprechende Kennzeichnung erforderlich machen würden, Klebestoffe zur Verfügung zu stellen, die hinsichtlich der Anwendungseigenschaften den herkömmlichen Klebstoffsystemen ebenbürtig sind.

Epoxid-basierte Harzsysteme werden seit langem erfolgreich als Klebstoffe oder Reparaturmassen für Konsumenten, Heimwerker und Handwerker sowie in der Luftfahrt-, Automobil- oder Elektroindustrie als Klebstoffe, Dichtstoffe oder zur Beschichtung von Oberflächen benutzt oder als Harzsysteme mit einer Reihe unterschiedlicher Materialien für die Herstellung von Verbundwerkstoffen verwendet. Härtbare Formulierungen, die Epoxid/Härter-Mischungen enthalten, eignen sich insbesondere als Strukturklebstoffe. Eine wichtige Eigenschaft des ungehärteten Harzsystems ist dessen Viskosität, die für die Handhabung und Verarbeitbarkeit bedeutend ist. Wichtige Materialeigenschaften der gehärteten Formulierungen sind hierbei u. a. Klebekraft (häufig als Zugscherfestigkeit bestimmt) und E-Modul.

Reaktive Epoxidharzsysteme des Standes der Technik enthalten häufig Bestandteile, die als wassergefährdend, toxisch, reizend und/oder sensibilisierend eingestuft werden und beispielsweise bei der Verarbeitung zu Kontaktdermatitis führen können. Nach europäischem Recht müssen solche Zubereitungen mit den entsprechenden Gefährdungskennzeichen (z.B.: C, Xn, Xi, N) versehen werden. Aus Gründen des Umweltschutzes, der Sicherheit und der Arbeitshygiene sind reaktive Epoxidharze enthaltende Zubereitungen wünschenswert, die nach europäischem Recht nicht kennzeichnungspflichtig sind und eine reduziertes sensibilisierendes Potential aufweisen, jedoch die technischen Anforderungen hinsichtlich Verarbeitbarkeit und Klebstoffeigenschaften erfüllen.

Es ist bekannt, dass reaktive Epoxidharze mit einer Molmasse von oberhalb 700 g/mol nicht sensibilisierend und nicht kennzeichnungspflichtig sind. Beispiele hierfür sind hochmolekulare Feststoffe auf Basis "DGEBA" (= Diglycidylether von Bisphenol A) und flüssige epoxy-terminierte Polyether mit hohem Epoxid-Äquivalentgewicht. Diese zeigen jedoch nicht die erforderlichen Viskositätseigenschaften für die Verarbeitung vor dem Aushärten und/oder die erforderlichen Festigkeitseigenschaften nach dem Aushärten. Hochmolekulare feste Epoxy-Novolake haben die für eine hohe Festigkeit erforderliche hohe Epoxy-Funktionalität (und entsprechend ein geringes Epoxy-Äquivalentgewicht), sind aber wegen Ihrer hohen Viskosität bei Raumtemperatur nicht verarbeitbar.

WO2005/028542 beschreibt ein System und ein Verfahren zum Befestigen von Teilen an einem Motor oder einem Getriebe. Dabei wird ein Klebstoff verwendet, welcher insbesondere einen Polythiolether mit zwei oder mehr reaktiven Gruppen, welche mit einem Härter reagieren können, aufweist, und ferner einen hierzu geeigneten Härter umfasst, wie beispielsweise einen epoxidbasierten Härter.

Aufgabe der vorliegenden Erfindung war es daher, eine härtbare Epoxidharzmischung zu entwickeln, die in toxikologischer und dermatologischer Hinsicht vorteilhaft ist und dennoch keine Nachteile bei den Anwendungseigenschaften, insbesondere der Viskosität bei der Verarbeitung und/oder der Festigkeit nach dem Aushärten aufweist.

Es wurde nun überraschenderweise gefunden, dass geeignete Mischungen unterschiedlicher reaktiver Epoxidharze zu der erwünschten Eigenschaftskombination von Kennzeichnungsfreiheit, Verarbeitbarkeit und Klebstoffeigenschaften führen.

Ein erster Gegenstand der vorliegenden Erfindung ist daher eine zweikomponentige Zusammensetzung,
deren erste Komponente eine Mischung von reaktiven Epoxidharzen und optional weiteren Formulierungsbestandteilen ist, die, bezogen auf die Masse aller Epoxidharze
a) mindestens 10 Gew.-% eines Epoxidgruppen-haltigen Reaktionsprodukts von Epichlorhydrin mit Polypropylenglykol, das ein Epoxid-Äquivalentgewicht von mindestens 250g/eq aufweist, sowie
b) mindestens 10 Gew.-% eines Epoxidgruppen-haltigen Reaktionsprodukts von Epichlorhydrin mit einem Novolakharz, das ein Epoxid-Äquivalentgewicht von mindestens 175g/eq aufweist, enthält,
und
deren zweite Komponente mindestens einen Thiolgruppen-haltigen Härter für Epoxidharze enthält, wobei die erste Komponente weiterhin mindestens 10 Gew.-% eines Epoxidgruppen-haltigen Reaktionsprodukts von Epichlorhydrin mit Bisphenol A, das ein Epoxid-Äquivalentgewicht von mindestens 500g/eq aufweist.

Erfindungsgemäß wird unter einem "reaktiven Epoxidharz" ein Präpolymer verstanden, das eine mittlere Epoxidfunktionalität größer 1 aufweist. Aufgrund der reaktiven Epoxidgruppen kann das Präpolymer mit weiteren gegenüber Epoxidgruppen reaktiven Molekülen (so genannten "Härtern") umgesetzt und hierdurch "ausgehärtet" oder "gehärtet" werden.

Als erste erfindungswesentliche Komponente a) enthält die erfindungsgemäße Zusammensetzung mindestens 10 Gew.-% eines Epoxidgruppen-haltigen Reaktionsprodukts von Epichlorhydrin mit Polypropylenglykol, das ein Epoxid-Äquivalentgewicht von mindestens 250g/eq aufweist.

In einer bevorzugten Ausführungsform enthält die erfindungsgemäße Zusammensetzung 10 bis 60 Gew.-% der Komponente a). Ganz bevorzugt ist ein Mengenbereich von 30 bis 45 Gew.-%. Die Mengenangaben beziehen sich dabei jeweils auf die Mischung aller Epoxidharze ohne die weiteren Formulierungsbestandteile.

Im Rahmen der dieser Erfindung zu Grunde liegenden Arbeiten konnte gezeigt werden, dass Epoxidgruppen-haltige Reaktionsprodukte von Epichlorhydrin mit Polypropylenglykol mit einem Epoxid-Äquivalentgewicht von mindestens 300g/eq besonders vorteilhafte Eigenschaften aufweisen.

Besonders bevorzugte Komponenten a) sind erfindungsgemäß die unter den Handelsbezeichnungen DER 732 (EEW 310-330 g/eq), DER 732P (EEW 310-330 g/eq), von der Firma Dow vertriebenen reaktiven Epoxyharze.

Besonders vorteilhaft ist es erfindungsgemäß, wenn entsprechende Epoxidgruppen-haltige Reaktionsprodukte von Epichlorhydrin mit Polypropylenglykol mit einem Epoxid-Äquivalentgewicht von weniger als 300g/eq maximal zu einem Anteil von 3 Gew.-%, insbesondere von maximal 1 Gew.-%, jeweils bezogen auf die erste Komponente bestehend aus einer Mischung von reaktiven Epoxidharzen und optional weiteren Formulierungsbestandteilen, in den Zusammensetzungen enthalten sind.

Als zweite erfindungswesentliche Komponente b) enthält die erfindungsgemäße Zusammensetzung mindestens 10 Gew.-% eines Epoxidgruppen-haltigen Reaktionsprodukts von Epichlorhydrin mit einem Novolakharz, das ein Epoxid-Äquivalentgewicht von mindestens 175g/eq aufweist.

In einer bevorzugten Ausführungsform enthält die erfindungsgemäße Zusammensetzung 10 bis 85 Gew.-% der Komponente b). Ganz bevorzugt ist ein Mengenbereich von 30 bis 45 Gew.-%. Die Mengenangaben beziehen sich dabei jeweils auf die Mischung aller Epoxidharze ohne die weiteren Formulierungsbestandteile.

Im Rahmen der dieser Erfindung zu Grunde liegenden Arbeiten konnte gezeigt werden, dass Epoxidgruppen-haltige Reaktionsprodukte von Epichlorhydrin mit einem Novolak mit einem Epoxid-Äquivalentgewicht von mindestens 180g/eq, und insbesondere von mindestens 190g/eq, besonders vorteilhafte Eigenschaften aufweisen.

Erfindungsgemäß bevorzugte Novolake sind die Polykondensationsprodukte von Formaldehyd mit Phenol und/oder Cresol.

Darüber hinaus hat es sich als vorteilhaft erwiesen, wenn die Reaktionsprodukte aus Epichlorhydrin und Novolak eine Epoxidfunktionaltität von mindestens 3, insbesondere von mindestens 3,5 aufweist.

Reaktionsprodukte aus Epichlorhydrin und Novolak, die ein Epoxid-Äquivalentgewicht von mindestens 175g/eq und gleichzeitig eine Epoxidfunktionaltität von mindestens 3 aufweisen, konnten hinsichtlich der erfindungsgemäß gestellten Aufgaben besonders überzeugen. Besonders bevorzugt sind Reaktionsprodukte von Epichlorhydrin und Novolak mit einem Epoxid-Äquivalentgewicht von mindestens 180g/eq und einer Epoxidfunktionaltität von mindestens 3, insbesondere Reaktionsprodukte von Epichlorhydrin und Novolak mit einem Epoxid-Äquivalentgewicht von mindestens 190g/eq und einer Eopxidfunktionaltität von mindestens 3,5.

Hierdurch wird am besten die erwünschte Eigenschaftskombination von Verarbeitbarkeit vor dem Aushärten und Klebefestigkeit nach dem Aushärten erreicht.

Besonders bevorzugte Komponenten b) sind erfindungsgemäß die unter den Handelsbezeichnungen DEN 439 (EEW 191-210g/eq; Funktionalität 3,8; Dow), Araldite ECN 1299 (Cresol-Formaldehyd-Novolak; EEW 235 g/eq; Funktionalität 2,5-5,5; Huntsman), Epikote 154 (EEW 176-181 g/eq; Hexion) vertriebenen reaktiven Epoxyharze. DEN 439 ist erfindungsgemäß ganz besonders bevorzugt.

Besonders vorteilhaft ist es erfindungsgemäß, wenn entsprechende Reaktionsprodukte von Epichlorhydrin und Novolak mit einem Epoxid-Äquivalentgewicht von weniger als 175g/eq maximal zu einem Anteil von 3 Gew.-%, insbesondere maximal zu einem Anteil von 1 Gew.-%, jeweils bezogen auf die erste Komponente bestehend aus der Mischung von reaktiven Epoxidharzen und optional weiteren Formulierungsbestandteilen, enthalten sind.

Um eine optimale Verarbeitbarkeit der erfindungsgemäßen Zusammensetzungen zu gewährleisten, hat es sich erfindungsgemäß als besonders vorteilhaft erwiesen, wenn die Epoxid-haltige Komponente Viskositäten unterhalb von 3000 Pas aufweisen. Epoxid-haltige Zubereitungen mit einer Viskosität unterhalb von 500Pas sind ganz besonders bevorzugt. Viskositätsmessungen erfolgen erfindungsgemäß bei 25°C mittels eines Rheometers und den folgenden Viskositätsabhängigen Einstellungen:
- bei einer Viskosität <0,25 Pa*s wurde mittels Kegel/Platte (0,04°/25mm) bei einer Scherrate 0-100 /s gemessen,
- Viskositäten >0,25 Pa*s und <10.000 Pa*s wurden mittels Platte/Platte (25mm/25mm) bei einer Scherrate 0-100/s gemessen, und
- Viskositäten >10.000 Pa*s wurden mittels Platte/Platte (25mm/25mm) und einer Winkelfrequenz von 100 rad/s gemessen.
Unter einer Messung mit einer Scherrate von 0-100 /s wird erfindungsgemäß eine Messung verstanden, bei der die Schergeschwindigkeit innerhalb von 100s von 0/s auf 100/s gesteigert wird. Anschließend wird die Schergeschwindigkeit für 30s konstant gehalten und dann das Ergebnis bestimmt.

Eine weitere wesentliche Eigenschaft der erfindungsgemäßen Mittel ist die so genannte Zugscherfestigkeit. Diese wird mittels des folgenden Versuchsaufbaus bestimmt:
Zwei sandgestrahlte, kaltgewälzte Stahlproben werden mit dem zu prüfenden Klebstoff auf einer Überlappungsfläche von 2,5 cm² mit einer Schichtdicke von 0,2mm benetzt und verklebt. Nach entsprechender Aushärtung wird die Zugscherfestigkeit des Klebstoffs gemäß DIN EN 1465 mit einer Geschwindigkeit von 15mm/min getestet.

Es hat sich erfindungsgemäß als vorteilhaft erwiesen, wenn die Klebstoffe nach ihrer Aushärtung eine Zugscherfestigkeit oberhalb von 8MPa, insbesondere oberhalb von 10MPa aufweisen. Dabei spielt die Geschwindigkeit des Aushärtprozesses keine wesentliche Rolle.

Als dritte erfindungswesentliche Komponente enthält die erfindungsgemäße Zusammensetzung mindestens einen Thiolgruppen-haltigen Härter für Epoxidharze.

Erfindungsgemäß wird unter einem "Thiolgruppen-haltigen Härter für Epoxidharze" eine Verbindung verstanden, die mindestens 2 Thiolgruppen pro Molekül aufweist. Dabei ist es erfindungsgemäß besonders bevorzugt, wenn es sich um eine bei 22°C flüssige Verbindung handelt.

Erfindungsgemäß kann es in einer speziellen Ausgestaltungsform bevorzugt sein, wenn es sich bei dem Thiolgruppen-haltigen Härter um eine polymere Verbindung handelt.

Erfindungsgemäß bevorzugte Thiolgruppen-haltige Härter sind die unter den Handelsbezeichnungen
- Capcure 3-800, Capcure 3830-81, Capcure LOF, Capcure WR6,Capcure WR35, Capcure 40 SEC HV (Cognis),
- GPM 800, GPM 800 LO, GPM 830 CB, GPM 845 MT, GPM 888, GPM 890 CB, GPM 891, GPM 895 FC (Gabriel Performance Products)
- Karenz MT [Pentaerythritol tetrakis (3-mercaptobutylate); CAS:31775-89-0] (Showa Denko)
- Dipentendimercaptan (CAS: 4802-20-4), Mercaptized Soy Oil, PM 407, PM 358, Mercaptized Castor Oil: 805-C (Chevron Phillips)
- Thiocure^{®} GDMA (Glycoldimercaptoacetat CAS: 123-81-9), Thiocure^{®} TMPMA (Trimethylpropantrimercaptoacetat CAS: 10193-96-1), Thiocure ^{®} PETMA ( Pentaerythritoltetramercaptoacetate CAS: 10193-994), Thiocure ^{®} TMPMP (Trimethylopropan-tris-3-mercaptopropionat CAS: 33007-83-9), Thiocure ^{®} PETMP (Pentaerythritol-tetra-3-mercaptopropionat CAS: 7575-23-7), Thiocure ^{®} ETTMP (Ethoxylated Trimethylpropane-tris-3-mercaptopropionat (Polymer) CAS: 345352-19-4) Bruno Bock
bekannten Verbindungen.

Weiterhin sind die folgenden Verbindungen erfindungsgemäß bevorzugte Thiolgruppen-haltige Härter:
- DMDO (3,6-Dioxa-1,8-octandithiol)
- Härtbares DMDO Umsetzungsprodukt
- 3-Oxa-1,5-pentandithiol
- 1,2-Ethandithiol T
- 1,3-Propandithiol
- 1,2-Propandithiol
- 1,4-Butandithiol
- 1,3-Butandithiol
- 2,3-Butandithiol
- 1,5-Pentandithiol
- 1,3-Pentandithiol
- 1,6-Hexandithiol
- 1,3-Dithio-3-methylbutan
- Ethylcyclohexyldithiol (ECHDT)
- Methylcyclohexyldithiol
- Methylsubstitutes Dimercaptodiethylsulfid,
- Dimethylsubstitutes Dimercaptodiethylsulfid,
- 2,3-Dimercapto-1-propanol
- Bis-(4-mercaptomethylphenyl)ether
- 2,2'-Thiodiethanthiol

Erfindungsgemäß besonders bevorzugte Thiolgruppen-haltige Härter sind
- Capcure 3-800, Capcure 3830-81 und Capcure LOF (Cognis)
- GPM 800, GPM 800 LO, GPM 830 CB und GPM 888 (Gabriel Performance Products)
- Mercaptized Soy Oil, PM 407, PM 358, und Mercaptized Castor Oil 805-C (Chevron Phillips)
- Thiocure ^{®} ETTMP (Ethoxylated Trimethylpropane-tris-3-mercaptopropionat (Polymer): CAS: 345352-19-4) (Bruno Bock)
- 1,5-Pentandithiol
- 1,3-Pentandithiol und
- 1,6-Hexandithiol.

Erfindungsgemäß kann es bevorzugt sein, wenn die zweite Komponente der Zusammensetzung weniger als 25 Gew.-%, insbesondere weniger als 20 Gew.-%, insbesondere weniger als 10 Gew.-% einer oder mehrerer der folgenden Verbindungen enthält, wobei die Mengenangabe auf die Gesamtzusammensetzung der zweiten Komponente bezogen ist:
- Pentaerythritol tetrakis (3-mercaptobutylate) (CAS:31775-89-0)
- Dipentendimercaptan (CAS: 4802-20-4)

### Glycoldimercaptoacetat (CAS: 123-81-9)

- Trimethylopropan-tris-3-mercaptopropionat (CAS: 33007-83-9)
- Pentaerythritol-tetra-3-mercaptopropionat (CAS: 7575-23-7)
- DMDO (3,6-Dioxa-1,8-octandithiol)
- 1,2-Ethandithiol
- 1,3-Propandithiol
- 1,4-Butandithiol
- 1,3-Butandithiol
- 2,3-Butandithiol und
- 2,3-Dimercapto-1-propanol.

Die Thiolgruppen-haltigen Härter werden vorzugsweise in einem Verhältnis von 1 Thiol Equivalent Härter pro 1 - 2 Epoxy Equivalent. eingesetzt. Dies bedeutet, dass die Anwendungsmischung vorzugsweise einen Überschuss an reaktiven Epoxygruppen gegenüber den reaktiven Thiolgruppen aufweist.

In der erfindungsgemäßen Ausführungsform der vorliegenden Erfindung enthält die erste Komponente weiterhin mindestens 10 Gew.-% eines Epoxidgruppen-haltigen Reaktionsprodukts von Epichlorhydrin mit Bisphenol A, das ein Epoxid-Äquivalentgewicht von mindestens 500g/eq aufweist.

In dieser Ausführungsform sind dementsprechend Zusammensetzungen besonders bevorzugt, die bezogen auf die Masse aller Epoxidharze, die folgenden Komponenten enthalten:
- a) 10 - 60Gew.-% eines Epoxidgruppen-haltigen Reaktionsprodukts von Epichlorhydrin mit Polypropylenglykol, das ein Epoxid-Äquivalentgewicht von mindestens 250g/eq aufweist,
- b) 15 - 85Gew.-% eines Epoxidgruppen-haltigen Reaktionsprodukts von Epichlorhydrin mit einem Novolakharz, das ein Epoxid-Äquivalentgewicht von mindestens 175g/eq aufweist, sowie
- c) 0 - 70Gew.-% eines Epoxidgruppen-haltigen Reaktionsprodukts von Epichlorhydrin mit mindestens einem Bisphenol, das ein Epoxid-Äquivalentgewicht von mindestens 500g/eq aufweist.

Besonders bevorzugt sind erfindungsgemäß Zusammensetzungen, die bezogen auf die Masse aller Epoxidharze, die folgenden Komponenten enthalten:
- a) 30 - 45Gew.-% eines Epoxidgruppen-haltigen Reaktionsprodukts von Epichlorhydrin mit Polypropylenglykol, das ein Epoxid-Äquivalentgewicht von mindestens 250g/eq aufweist,
- b) 30- 45Gew.-% eines Epoxidgruppen-haltigen Reaktionsprodukts von Epichlorhydrin mit einem Novolakharz, das ein Epoxid-Äquivalentgewicht von mindestens 175g/eq aufweist, sowie
- c) 10 - 40Gew.-% eines Epoxidgruppen-haltigen Reaktionsprodukts von Epichlorhydrin mit mindestens einem Bisphenol, das ein Epoxid-Äquivalentgewicht von mindestens 500g/eq aufweist.

Besonders bevorzugt sind erfindungsgemäß weiterhin Zusammensetzungen, die bezogen auf die Masse aller Epoxidharze, die folgenden Komponenten enthalten:
- a) 30 - 45Gew.-% eines Epoxidgruppen-haltigen Reaktionsprodukts von Epichlorhydrin mit Polypropylenglykol, das ein Epoxid-Äquivalentgewicht von mindestens 250g/eq aufweist,
- b) 30- 45Gew.-% eines Epoxidgruppen-haltigen Reaktionsprodukts von Epichlorhydrin mit einem Novolakharz, das ein Epoxid-Äquivalentgewicht von mindestens 175g/eq aufweist sowie eine Epoxyfunktionalität von mindestens 3 aufweist, sowie
- c) 10 - 40Gew.-% eines Epoxidgruppen-haltigen Reaktionsprodukts von Epichlorhydrin mit mindestens einem Bisphenol, das ein Epoxid-Äquivalentgewicht von mindestens 500g/eq aufweist,

Es hat sich erfindungsgemäß als besonders vorteilhaft erwiesen, wenn die erfindungsgemäße Zusammensetzung 0 bis 70 Gew.-% eines Epoxidgruppen-haltigen Reaktionsprodukts von Epichlorhydrin mit Bisphenol A, das ein Epoxid-Äquivalentgewicht von mindestens 500g/eq aufweist, enthält. Ganz bevorzugt ist ein Mengenbereich von 10 bis 40 Gew.-%. Die Mengenangaben beziehen sich dabei jeweils auf die Mischung aller Epoxidharze ohne die weiteren Formulierungsbestandteile.

Im Rahmen der dieser Erfindung zu Grunde liegenden Arbeiten konnte gezeigt werden, dass Epoxidgruppen-haltigen Reaktionsprodukte von Epichlorhydrin mit Bisphenol A, das ein Epoxid-Äquivalentgewicht von mindestens 560g/eq besonders vorteilhafte Eigenschaften aufweisen.

Erfindungsgemäß besonders bevorzugte Epoxidgruppen-haltigen Reaktionsprodukte von Epichlorhydrin mit Bisphenol A, das ein Epoxid-Äquivalentgewicht von mindestens 500g/eq sind unter den Handelsbezeichnungen
- Epikote^{®} 1002 (EEW 575-700g/eq; Epoxy-Funtionalität 2; Hexion)
- DER^{®} 662E (EEW 590-630g/eq; Epoxy-Funktionalität 2)
- Epon^{®} 1002F (EEW 600-700g/eq; Epoxy-Funktionalität 2)
- DER^{®} 662UH (EEW 675-750g/eq; Epoxy-Funktionalität 2)
- DER^{®} 663U (EEW 730-820g/eq; Epoxy-Funktionalität 2)
- DER^{®} 664U (EEW 875-955g/eq; Epoxy-Funktionalität 2)
- Epon^{®} 1009F (EEW 2300 - 3800g/eq; Epoxy-Funktionalität 2; Hexion)
- Epon^{®} 1007F (EEW 1700-2300g/eq; Epoxyfunktionalität 2; Hexion)
- Epon^{®} 1004F (EEW 800-950g/eq; Epoxy-Funktionalität 2; Hexion)
- DER^{®} 692H (EEW 660-720g/eq; Eopxy-Funktionalität 2; Dow)
- DER^{®} 692 (EEW 660-720g/eq; Epoxy-Funktionalität 2; Dow)
vertriebenen Epoxyharze. Die unter den Handelsbezeichnungen Epikote^{®} 1002, DER^{®} 662E und Epon^{®} 1002F vertriebenen Produkte sind erfindungsgemäß ganz besonders bevorzugt. Epon^{®} 1002F ist erfindungsgemäß ganz besonders bevorzugt.

Besonders vorteilhaft ist es erfindungsgemäß, wenn entsprechende Epoxidgruppen-haltige Reaktionsprodukte von Epichlorhydrin mit Bisphenol A, die ein Epoxid-Äquivalentgewicht unterhalb von 500g/eq aufweisen, maximal zu einem Anteil von 3 Gew.-%, insbesondere maximal zu einem Anteil von 1 Gew.-%, jeweils bezogen auf die erste Komponente bestehend aus einer Mischung von reaktiven Epoxidharzen und optional weiteren Formulierungsbestandteilen, in den Zusammensetzungen enthalten sind.

Insbesondere in toxikologischer Hinsicht hat es sich als vorteilhaft erwiesen, wenn die erfindungsgemäßen Zusammensetzungen neben den genannten erfindungswesentlichen Epoxidgruppen-haltigen Reaktionsprodukten a), b) und c) weniger als 3 Gew.-%, insbesondere weniger als 1 Gew.-% weiterer Epoxidgruppen-haltiger Reaktionsprodukte enthalten, jeweils bezogen auf die erste Komponete bestehend aus der Mischung von reaktiven Epoxidharzen und optional weiteren Formulierungsbestandteilen.

In einer besonders bevorzugten Ausführungsform dieses Gegenstandes besteht die Mischung der Epoxidharze aus
- a) 10 - 60Gew.-% eines Epoxidgruppen-haltigen Reaktionsprodukts von Epichlorhydrin mit Polypropylenglykol, das ein Epoxid-Äquivalentgewicht von mindestens 250g/eq aufweist,
- b) 15 - 85Gew.-% eines Epoxidgruppen-haltigen Reaktionsprodukts von Epichlorhydrin mit einem Novolakharz, das ein Epoxid-Äquivalentgewicht von mindestens 175g/eq aufweist, sowie
- c) 0 - 70Gew.-% eines Epoxidgruppen-haltigen Reaktionsprodukts von Epichlorhydrin mit mindestens einem Bisphenol, das ein Epoxid-Äquivalentgewicht von mindestens 500g/eq aufweist,
wobei sich die Mengen der Bestandteile a), b) und c) zu 100Gew.-% ergänzen.

In einer ganz besonders bevorzugten Ausführungsform dieses Gegenstandes besteht die Mischung der Epoxidharze aus
- a) 30 - 45Gew.-% eines Epoxidgruppen-haltigen Reaktionsprodukts von Epichlorhydrin mit Polypropylenglykol, das ein Epoxid-Äquivalentgewicht von mindestens 250g/eq aufweist,
- b) 30- 45Gew.-% eines Epoxidgruppen-haltigen Reaktionsprodukts von Epichlorhydrin mit einem Novolakharz, das ein Epoxid-Äquivalentgewicht von mindestens 175g/eq aufweist, sowie
- c) 10 - 40Gew.-% eines Epoxidgruppen-haltigen Reaktionsprodukts von Epichlorhydrin mit mindestens einem Bisphenol, das ein Epoxid-Äquivalentgewicht von mindestens 500g/eq aufweist,
wobei sich die Mengen der Bestandteile a), b) und c) zu 100Gew.-% ergänzen.

In einer weiteren ganz besonders bevorzugten Ausführungsform dieses Gegenstand besteht die Mischung der Epoxidharze aus
- a) 30 - 45Gew.-% eines Epoxidgruppen-haltigen Reaktionsprodukts von Epichlorhydrin mit Polypropylenglykol, das ein Epoxid-Äquivalentgewicht von mindestens 250g/eq aufweist,
- b) 30- 45Gew.-% eines Epoxidgruppen-haltigen Reaktionsprodukts von Epichlorhydrin mit einem Novolakharz, das ein Epoxid-Äquivalentgewicht von mindestens 175g/eq sowie eine Epoxyfunktionalität von mindestens 3 aufweist, sowie
- c) 10 - 40Gew.-% eines Epoxidgruppen-haltigen Reaktionsprodukts von Epichlorhydrin mit mindestens einem Bisphenol, das ein Epoxid-Äquivalentgewicht von mindestens 500g/eq aufweist,
wobei sich die Mengen der Bestandteile a), b) und c) zu 100Gew.-% ergänzen.

Weiterhin hat es sich in einer Ausführungsform der vorliegenden Erfindung als vorteilhaft erwiesen, wenn die zweite Komponente der erfindungsgemäßen zweikomponentigen Zusammensetzung zusätzlich zu dem Thiolgruppen-haltigen Härter einen Amingruppen-haltigen Härter für Epoxidharze enthält.

Diese Amingruppen-haltigen Härter für Epoxidharze können beispielsweise ausgewählt werden aus den folgenden Verbindungen: cyclische tertiäre Amine, wie beispielsweise 1,5-Diazabicyclo[4.3.0]non-5-en (DBN) oder 1,8-Diazabicyclo[5.4.0]undec-7-en (DBU), aromatische Amine und/oder deren Mischungen. Dabei können die Härter sowohl stöchiometrisch mit in die Härtungsreaktion einbezogen sein, sie können jedoch auch katalytisch wirksam sein.

Weiterhin eigenen sich Addukte von Aminoverbindungen an Epoxidharze als beschleunigende Zusätze. Geeignete Aminoverbindungen sind tertiäre aliphatische, aromatische oder cyclische Amine. Geeignete Epoxyverbindungen sind beispielsweise Polyepoxide auf Basis von Glycidylethern des Bisphenols A oder F oder des Resorcins. Konkrete Beispiele für solche Addukte sind Addukte von tertiären Aminen wie 2-Dimethylaminoethanol, N-substituierte Piperazine, N-substituierte Homopiperazine, N-substituierte Aminophenole an Di- oder Polyglycidylether des Bisphenols A oder F oder des Resorcins.

Beispielsweise sind hierfür die als "Jeffamine™ D" oder "Jeffamine™ T" bekannten di- oder trifunktionalen aminoterminierten Polyalkylenglykole, insbesondere auf Basis von Etylenoxid und/oder Propylenoxid geeignet. Weitere Beispiele sind Polyaminoamide (bevorzugt: verschiede Typen Versamid™, Aradur™ oder Ancamide™), Polyamine (bevorzugt: Diethylentriamin, Triethylentetramin, Tetraethylenpentaamin, Pentaethylenhexamin, Aradur™, Ancamin™, Lauromin™), cycloaliphatische Polyamine (bevorzugt: Ancamine™, Lauromine™), Polyaminoimidazolin (bevorzugt: Versamid™), Aralkylamine (bevorzugt: MXDA), aromatische Amine (bevorzugt 4,4'-Diaminodiphenylsulfone, MDA), tertiäre Amine (bevorzugt Versamine EH-30, Versamine EH-50).

Der oder die Amingruppen-haltigen Härter für Epoxidharze sind in den erfindungsgemäßen Mitteln vorzugsweise in Mengen von 0 bis 20 Gew.-%, bezogen auf die zweite Komponente bestehend aus Härtern und optional weiteren Formulierungsbestandteilen, enthalten.

In einer bevorzugten Ausführungsform haben sich insbesondere die tertiären Amine als besonders vorteilhaft erwiesen. Diese sind in den erfindungsgemäßen Mitteln vorzugsweise in einer Menge von 0 bis 20 Gew.-%, insbesondere in Mengen von 0,1 bis 18Gew.-%, ganz besonders bevorzugt in Mengen von 5 bis 15 Gew.-%, jeweils bezogen auf die zweite Komponente bestehend aus Härtern und optional weiteren Formulierungsbestandteilen, enthalten.

Erfindungsgemäß sind Zusammensetzungen besonders bevorzugt, deren zweite Komponente einen im Temperaturbereich von 0 bis 60 °C, insbesondere von 0 bis 25°C wirksamen Härter für Epoxidharze enthält oder darstellt.

Zur Verbesserung des Bruchverhaltens, insbesondere bei Temperaturen unterhalb von 0 °C, können die erfindungsgemäßen Zubereitungen einen oder mehrere unterschiedliche so genannte Schlagzähigkeits-Verbesserer (englisch: "toughener") enthalten. Derartige Schlagzähigkeits-Verbesserer sind dem Fachmann auf dem Gebiet der Epoxid-Klebstoffe bekannt. Beispielsweise können sie ausgewählt sein aus: Thermoplastischen Isocyanaten oder Polyurethanen, Kautschuk-Partikeln, insbesondere solchen mit Kern-Schale-Struktur, und Block-Copolymeren, insbesondere solchen, die einen ersten Polymerblock mit einer Glasübergangstemperatur von unterhalb 15 °C und einen zweiten Polymerblock mit einer Glasübergangstemperatur von oberhalb 25 °C enthalten. Derartige Block-Copolymere sind vorzugsweise ausgewählt aus solchen, bei denen ein erster Polymerblock ausgewählt ist aus einem Polybutadien- oder Polyisoprenblock und ein zweiter Polymerblock ausgewählt ist aus einem Polystyrol- oder einem Polymethylmethacrylat-Block. Spezielle Beispiele hierfür sind Block-Copolymere mit folgendem Blockaufbau: Styrol-Butadien-(Meth)Acrylat, Styrol-Butadien-(Meth)Acrylsäureester, Ethylen-(Meth)Acrylsäureester-Glycidyl(meth)acrylsäureester, Ethylen-(Meth)Acrylsäureester-Maleinsäureanhydrid, Methylmethacrylat-Butylacrylat-Methylmethacrylat.

Weiterhin hat es sich als erfindungsgemäß vorteilhaft erwiesen, wenn die erste Komponente der erfindungsgemäßen Zusammensetzungen neben der Mischung von Epoxidharzen mindestens einen anorganischen und/oder organischen Füllstoff enthält.

In einer weiteren Ausführungsform hat es sich als vorteilhaft erwiesen, wenn die zweite Komponente der erfindungsgemäßen Zusammensetzung neben den erfindungswesentlichen Härtern mindestens einen anorganischen und/oder organischen Füllstoff enthält.

Erfindungsgemäß bevorzugt Füllstoffe sind zum Beispiel die diversen gemahlenen oder gefällten Kreiden, Ruß, Calcium-Magnesiumcarbonate, Talkum, Schwerspat sowie insbesondere silicatische Füllstoffe vom Typ des Aluminium-Magnesium-Calcium-Silicats, z. B. Wollastonit, Chlorit. Weiterhin kann es bevorzugt sein, Calciumsulfat als Füllstoff zu verwenden.

Zur Gewichtsreduzierung kann die Zubereitung zusätzlich zu den vorgenannten "normalen" Füllstoffen so genannte Leichtfüllstoffe enthalten. Diese können ausgewählt werden aus der Gruppe der Metallhohlkugeln wie z. B. Stahlhohlkugeln, Glashohlkugeln, Flugasche (Fillite), Kunststoffhohlkugeln auf der Basis von Phenolharzen, Epoxidharzen oder Polyestern, expandierte Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, keramische Hohlkugeln oder organische Leichtfüllstoffe natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt werden dabei solche Leichtfüllstoffe auf der Basis von Mikrohohlkugeln, die in der ausgehärteten Zubereitung eine hohe Druckfestigkeit gewährleisten.

Die erfindungsgemäßen Formulierungen können prinzipiell frei von Füllstoffen formuliert werden. Im Rahmen dieser Ausführungsform ist unter dem Begriff "frei von" ein Füllstoffgehalt von weniger als 0,5Gew.-%, vorzugsweise weniger als 0,1Gew.-%, jeweils bezogen auf sämtliche Formulierungsbestandteile der jeweiligen Komponente zu verstehen.

Bei bei Raumtemperatur flüssigen Formulierungen hat sich ein Füllstoffgehalt von 0 bis 65 Gew.-%, vorzugsweise von 20 bis 40Gew.-%, jeweils bezogen auf sämtliche Formulierungsbestandteile der jeweiligen Komponente, als besonders vorteilhaft erwiesen.

Bei bei Raumtemperatur festen Formulierungen hat sich ein Füllstoffgehalt von 25 bis 95Gew.-%, vorzugsweise von 40 bis 75Gew.-%, jeweils bezogen auf sämtliche Formulierungsbestandteile der jeweiligen Komponente, als besonders vorteilhaft erwiesen.

Weiterhin können die erfindungsgemäßen härtbaren Zubereitungen gängige weitere Hilfs- und Zusatzmittel wie z. B. Weichmacher, Rheologie-Hilfsmittel, Netzmittel, Haftvermittler, Alterungsschutzmittel, Stabilisatoren und/oder Farbpigmente enthalten.

Die erfindungsgemäßen zweikomponentigen Klebstoffe können als Klebstoffe oder als Matrix für ein Composit verwendet werden, worin eine weitere Ausführungsform der vorliegenden Erfindung besteht. Besonders kann der Klebstoff zum Fügen und Reparieren von Teilen im Schiffsbau, Flugzeugbau und im Fahrzeugbau Verwendung finden. Er zeichnet sich durch gute Verarbeitbarkeit und hohe Festigkeit einerseits sowie durch besonders geringe Gesundheitsgefährdung andererseits aus. Weitere Anwendungsgebiete für die erfindungsgemäßen Systeme sind der Do-it-yourself-Bereich sowie der Bereich Maintenance, Repair and Overhaul für Fahrzeuge, Maschinen und Flugzeugbau, aber auch Anwendungsbereiche in anderen Bereichen der generellen Industrie sind erfindungsgemäß mit umfasst.

Die erfindungsgemäßen Mittel bestehen aus zwei Komponenten. Diese müssen bis unmittelbar vor der Anwendung separat voneinander gelagert werden.

Dies kann vorzugsweise durch eine Konfektionierung in getrennten Behältern erfolgen. Die Entnahme der Zubereitung kann dann unmittelbar vor der Anwendung erfolgen. Dies kann beispielsweise durch manuelle Abmessung der benötigten Mengen aus Vorratsgefäßen, wie beispielsweise Fässern erfolgen.

Die Dosierung kann neben der rein manuellen Abmessung auch durch einfache Handdosiergeräte bis hin zu vollautomatisierten Systemen erfolgen. Derartige Systeme werden beispielsweise von der der Firma Loctite vertrieben. Beispiele für derartige automatisierte Systeme sind volumetrische Doppel-Zahnradpumpen, Doppelpräzisionskolbendosierer, Doppelschneckenpumpendosierer oder Fasspumpensysteme.

In einer besonders bevorzugten Ausführungsform der vorliegenden Erfindung werden die erfindungsgemäßen Zubereitung in entsprechenden Kartuschen, mit einem Volumenverhältnis von 1:1, 1:2 beziehungsweise 1:10 (Komponente mit Epoxyharzmischung : Komponente mit Thiolgruppen-haltigen Härter) angeboten. Durch die Wahl derartiger Doppelkartuschen soll erfindungsgemäß eine gleich bleibende Dosierung und somit ein konstantes Mischungsverhältnis der beiden Komponenten zueinander sichergestellt werden. Die erfindungsgemäßen Kartuschen können bei der Anwendung mit Hilfe von einfachen Handdosiergeräten, aber auch mit pneumatischen und/oder vollständig automatisierten Systemen entleert werden.

Ein zweiter Gegenstand der vorliegenden Erfindung ist daher ein Dosiersystem, das zwei separate Behälter, die getrennt voneinander die erste und die zweite Komponente der erfindungsgemäßen Zusammensetzungen enthalten, sowie eine Dosiervorrichtung aufweist.

In einer anderen Konfektionierungsform können die beiden Komponenten der erfindungsgemäßen Zusammensetzung coextrudiert werden und dementsprechend bis zur Anwendung unmittelbar nebeneinander vorliegend konfektioniert sein. Zum Zeitpunkt der Anwendung müssen dann die beiden Komponenten gründlich miteinander durchmischt werden. Dies kann beispielsweise durch Kneten des Coextrudates erfolgen.

Ein dritter Gegenstand der vorliegenden Erfindung ist daher eine Zusammensetzung nach einem der Ansprüche 1 bis 9, die als Coextrudat konfektioniert ist.

Im Rahmen dieser Ausführungsform hat es sich als vorteilhaft erwiesen, wenn ein oder beide Komponenten des Coextrudates mit geringen Mengen eines Farbstoffes versetzt werden. Durch die unterschiedliche Anfärbung der Komponenten des Coextrudates ist es möglich, den Grad der Durchmischung der beiden Komponenten des Coextrudates zu verfolgen.

Ein vierter Gegenstand der vorliegenden Erfindung ist ein Verfahren zum Fügen und/oder Reparieren von Teilen, bei dem in einem ersten Schritt, die zwei Komponenten der erfindungsgemäßen Zusammensetzungen miteinander vermischt werden, die resultierende Anwendungsmischung auf die Überlappungsflächen der zu fügenden Teile aufgebracht wird, die Teile anschließend in Kontakt miteinander gebracht werden, und die Anwendungsmischung dann aushärtet.

Die Aushärtungszeit ist dabei abhängig von der exakten Zusammensetzung des Systems, der aufgetragenen Menge und der Schichtdicke und kann zwischen einigen wenigen Minuten bis hin zu mehreren Tagen betragen.

### Ausführungsbeispiele

### 1 Harzmischungen

### 1.1 Herstellung der Harzmischungen

Es wurden die folgenden Harzmischungen durch Mischung der Einzelkomponenten und starkem Rühren bei 70-100°C für 1 Stunde hergestellt.

### 1.2 Messung der Viskositäten

Die Viskositäten wurden auf einem Gerät ARES der Fa. TA Instruments, New Castle, DE 19720, USA bei einer Temperatur von 25°C gemessen und mittels der Software TA-Orchestrator ausgewertet. Bei einer Viskosität <0,25 Pa*s wurde mittels Kegel/Platte (0,04°/25mm) bei einer Scherrate 0-100 /s gemessen. Viskositäten >0,25 Pa*s und <10.000 Pa*s wurden mittels Platte/Platte (25mm/25mm) bei einer Scherrate 0-100 /s gemessen. Viskositäten >10.000 Pa*s wurden mittels Platte/Platte (25mm/25mm) und einer Winkelfrequenz von 100 rad/s gemessen.

### 1.3 Zusammensetzungen und Ergebnisse

| | DER 732 [g] | DEN 439 [g] | Epikote 1002 [g] | Viskosität [Pa*s] | EEW* [g/eq] |
|---|---|---|---|---|---|
| H1 | 40 | 40 | 20 | 80 | 281 |
| H2 | 40 | 30 | 30 | 106 | 311 |
| H3 | 40 | 20 | 40 | 180 | 348 |
| H4 | 40 | 10 | 50 | 320 | 395 |
| H5 | 30 | 40 | 30 | 680 | 294 |
| N1 | 20 | 0 | 80 | 20000 | 532 |
| N2 | 15 | 0 | 85 | 75000 | 555 |
| N3 | 85 | 0 | 15 | 0,375 | 345 |

Der in der letzten Spalte angegebene EEW*-Wert wurde aus den gewichteten EEW-Werten der Einzelkomponenten berechnet. Im Vergleich zu den erfindungsgemäßen Harzmischungen H1 bis H5 weisen die nicht-erfindungsgemäßen Harzmischungen N1 und N2 deutlich zu hohe Viskositäten auf. Eine optimale Anwendung ist bei derartigen Viskositäten nicht möglich.

### 2 Bestimmung der Zugscherfestigkeiten

Zur Bestimmung der Zugscherfestigkeiten wurden die Komponenten I und II wie in Tabelle 2 angegeben gründlich miteinander vermischt. Mit dem resultierenden Klebstoff wurden unmittelbar im Anschluss zwei sandgestrahlte, kaltgewälzte Stahlproben mit einer Überlappungsfläche von 2,5 cm² und einer Schichtdicke von 0,2mm benetzt und verklebt. Anschließend wurden die Proben für 7 Tage bei Raumtemperatur ausgehärtet.

Nach dieser Zeit wurden die Zugscherfestigkeit des Klebstoffs gemäß DIN EN 1465 mit einer Geschwindigkeit von 15mm/min getestet.

**Tabelle 2:**

| Komponente I | | Komponente II | | Eq KI/ Eq KII | LSS [N/mm²] |
|---|---|---|---|---|---|
| Harz | Füllstoffe | Härter | Katalysator | | |
| 4,48g H1 (0,0159Eq) | 2,09 g Luzenac 2; 0,30g Cabosil TS-720 | 3,13g Capcure 3830-81 (0,0100Eq) | -- | 1,6 | 15 |
| 4,94g H1 (0,0176Eq) | 1,56g Omyacarb 4HD; 0,13g Cabosil TS-720 | 3,0g Capcure 3-800 (0,0108Eq) | 0,37g Versamine EH-30 | 1,6 | 12 |
| 10,0g H5 (0,0340Eq) | -- | 5,9g Capcure 3-800 (0,0212Eq) | 0,74g Versamine EH-30 | 1,6 | 12 |
| 5,96g H1 (0,0212Eq) | -- | 3,67g Capcure 3-800 (0,0132Eq) | 0,37g Versamine EH-30 | 1,6 | 16 |
| 10,0g H3 (0,0287Eq) | -- | 5,0g Capcure 3-800 (0,0180Eq) | 0,64g Versamine EH-30 | 1,6 | 15 |
| 10,0g H2 (0,0322Eq) | -- | 5,6g Capcure 3-800 (0,0201 Eq) | 0,70g Versamine EH-30 | 1,6 | 12 |
| 10,0g H4 (0,0253Eq) | -- | 4,4g Capcure 3-800 (0,0158Eq) | 0,55g Versamien EH-30 | 1,6 | 16 |
| 7,42g N2 (0,0138Eq) | -- | 2,34g Capcure 3-800 (0,0084Eq) | 0,23g Versamine EH-30 | 1,6 | <0.1 |
| 6,45g N3 (0,0187Eq) | -- | 3,23g Capcure 3-800 (0,0116Eq) | 0,32g Versamine EH-30 | 1,6 | 2 |
| 7,42g N1 (0,0139Eq) | -- | 2,41g Capcure 3-800 (0,0087Eq) | 0,24g Versamine EH-30 | 1,6 | <0.1 |
| 4,90g DER 331 (0,0262Eq) | -- | 4,54g Capcure 3-800 (0,0163Eq) | 0,56g Versamine EH-30 | 1,6 | 11 |

Bei der Bestimmung der Rohstoffmengen, die miteinander zu Reaktion gebracht wurden, wurde darauf geachtet, dass das Verhältnis an reaktiven Epoxidgruppen zu reaktiven Thiolgruppen in der Anwendungsmischung konstant gehalten wurde. Die jeweils eingesetzten Equivalente sowie deren Verhältnis sind in ebenfalls der Tabelle 2 zu entnehmen.

Die gemessenen Zugscherfestigkeiten (LLS) zeigen deutlich, dass die erfindungsgemäßen 2-Komponentenzusammensetzungen mit den Harzen H1 bis H5, den nicht erfindungsgemäßen 2-Komponentenzusammensetzungen mit den Harzen N1 bis N3 deutlich überlegen sind. Außerdem konnte durch diese Messungen gezeigt werden, dass die Zugscherfestigkeiten der erfindungsgemäßen Systeme sogar höher ausfällt als die Zugscherfestigkeit eines herkömmlichen Klebstoffs auf Basis von DER 331, der ein hohes sensibilisierendes Potential aufweist und kennzeichnungspflichtig ist.

Die im Rahmen der Beispiele der Komponente I zugeordneten Füllstoffe Luzenac 2, Cabosil TS-720 und Omyacarb 4HD können in einer weiteren Ausführungsform der Beispiele auch in die Komponenten II konfektioniert werden.

### 3 Verzeichnis der eingesetzten Rohstoffe

| | |
|---|---|
| Cabosil^{®} TS-720 | Siliziumdioxid, Pyrogene amorphe Kieselsäure, Hersteller Cabot |
| Capcure^{®} 3-800 | Mercaptanterminiertes flüssiges Polymer; Mercaptanzahl mind. 3,0 meg/g; Mercaptane equivalent weight 278 g/eq.; Herstellter Cognis |
| Capcure^{®} 3830-81 | Mischung aus 8 Gewichtsteilen Capcure^{®} 3-800 und 1 Gewichtsteil Versamine^{®} EH-30; Hersteller Cognis |
| DEN^{®} 439 | Reaktionsprodukt von Epichlorhydrin mit einem Phenol/Formaldehyd-Novolak; EEW 200g/eq; Epoxyfunktionalität ±3,8; Hersteller Dow |
| DER^{®} 331 | Reaktionsprodukt von Bisphenol A mit Epichlorhydrin; EEW 187g/eq; Hersteller Dow |
| DER^{®} 732 | Reaktionsprodukt von Epichlorhydrin mit Polypropylenglykol; EEW 320g/eq; Hersteller Dow |
| Epikote^{®} 1002 | Reaktionsprodukt von Epichlorhydrin mit Bisphenol A; EEW 638g/eq; Hersteller Hexion; |
| Luzenac^{®} 2 | natürliche Assoziation von Talk, Chlorite und Dolomite; Hersteller Luzenac Group |
| Omyacarb^{®} 4HD | Calcium Carbonat (Kalksteinmehl; Hersteller Omya GmbH |
| Versamine^{®} EH-30 | 2,4,6-Tris(dimethylaminomethyl)phenol; 100% Aktivsubstanzgehalt; Hersteller Cognis |

## Patentansprüche

1. Zweikomponentige Zusammensetzung, deren erste Komponente eine Mischung von reaktiven Epoxidharzen und optional weiteren Formulierungsbestandteilen ist, die, bezogen auf die Masse aller Epoxidharze
a) mindestens 10 Ges.-% eines Epoxidgruppen-haltigen Reaktionsprodukts von Epichlorhydrin mit Polypropylenglykol, das ein Epoxid-Äquivalentgewicht von mindestens 250g/eq aufweist, sowie
b) mindestens 10 Gew.-% eines Epoxidgruppen-haltigen Reaktionsprodukts von Epichlorhydrin mit einem Novolakharz, das ein Epoxid-Äquivalentgewicht von mindestens 175g/eq aufweist, enthält,
und deren zweite Komponente mindestens einen Thiolgruppen-haltigen Härter für Epoxidharze enthält, wobei
die erste Komponente weiterhin mindestens 10 Gew.-% eines Epoxidgruppen-haltigen Reaktionsprodukts von Epichlorhydrin mit Bisphenol A umfasst, das ein Epoxid-Äquivalentgewicht von mindestens 500g/eq aufweist.

2. Zusammensetzung nach Anspruch 1, **dadurch gekennzeichnet, dass** die zweite Komponente zusätzlich einen Amingruppen-haltigen Härter für Epoxidharze enthält.

3. Zusammensetzung nach einem der Ansprüche 1 oder 2, **dadurch gekennzeichnet, dass** die Komponente a) ein Epoxid-Äquivalentgewicht von mindestens 300g/eq aufweist, und/oder
dass die Komponente b) ein Epoxid-Äquivalentgewicht von mindestens 190g/eq aufweist.

4. Zusammensetzung nach einem oder mehreren der Ansprüche 1 bis 3, **dadurch gekennzeichnet, dass** die Komponente b) ein Novolak-Harz mit einer Epoxid-Funktionalität von mindestens 3 enthält oder darstellt.

5. Zusammensetzung nach einem oder mehreren der Ansprüche 1 bis 4, **dadurch gekennzeichnet, dass** die Komponente b) ein Phenol-Formaldehyd-Novolakharz und/oder ein Cresol-Formaldehyd-Novolakharz enthält oder darstellt.

6. Zusammensetzung nach einem oder mehreren der Ansprüche 1 bis 4, **dadurch gekennzeichnet, dass** sie, bezogen auf die Masse aller Epoxidharze, die folgenden Komponenten enthält:
a. 10 - 60Gew.-% eines Epoxidgruppen-haltigen Reaktionsprodukts von Epichlorhydrin mit Polypropylenglykol, das ein Epoxid-Äquivalentgewicht von mindestens 250g/eq aufweist,
b. 15 - 85Gew.-% eines Epoxidgruppen-haltigen Reaktionsprodukts von Epichlorhydrin mit einem Novolakharz, das ein Epoxid-Äquivalentgewicht von mindestens 175g/eq aufweist, sowie
c. 0 - 70Gew.-% eines Epoxidgruppen-haltigen Reaktionsprodukts von Epichlorhydrin mit mindestens einem Bisphenol, das ein Epoxid-Äquivalentgewicht von mindestens 500g/eq aufweist.

7. Zusammensetzung nach einem der Ansprüche 1 bis 6, **dadurch gekennzeichnet, dass** dessen zweite Komponente einen im Temperaturbereich von 0 bis 60 °C, insbesondere von 0 bis 25°C wirksamen Härter für Epoxidharze enthält oder darstellt.

8. Zusammensetzung nach einem der Ansprüche 1 bis 7, **dadurch gekennzeichnet, dass** die erste Komponenten neben der Mischung von Epoxidharzen mindestens einen anorganischen und/oder organischen Füllstoff enthält.

9. Dosiersystem, das zwei separate Behälter, die getrennt voneinander die erste und die zweite Komponente der Zusammensetzungen nach einem der Ansprüche 1 bis 8 enthalten, sowie eine Dosiervorrichtung aufweist.

10. Zusammensetzung nach einem der Ansprüche 1 bis 8, die als Coextrudat konfektioniert ist.

11. Verfahren zum Fügen und/oder Reparieren von Teilen, bei dem in einem ersten Schritt, die zwei Komponenten einer Zusammensetzung nach einem der Ansprüche 1 bis 8 miteinander vermischt werden, die resultierende Anwendungsmischung auf die Überlappungsflächen der zu fügenden Teile aufgebracht wird, die Teile anschließend in Kontakt miteinander gebracht werden, und die Anwendungsmischung dann aushärtet.

## Claims

1. A two-component composition, the first component of which is a mixture of reactive epoxy resins and optionally further formulation constituents, which first component contains, based on the mass of all the epoxy resins
a) at least 10 wt.% of an epoxide group-containing reaction product of epichlorohydrin with polypropylene glycol, which reaction product has an epoxy equivalent weight of at least 250g/eq, and
b) at least 10 wt.% of an epoxide group-containing reaction product of epichlorohydrin with a novolac resin, which reaction product has an epoxy equivalent weight of at least 175g/eq,
and the second component of which contains a thiol group-containing curing agent for epoxy resins, wherein
the first component further comprises at least 10 wt.% of an epoxide group-containing reaction product of epichlorohydrin with bisphenol A, which reaction product has an epoxy equivalent weight of at least 500g/eq.

2. The composition according to claim 1, **characterized in that** the second component additionally contains an amine group-containing curing agent for epoxy resins.

3. The composition according to either claim 1 or claim 2, **characterized in that** the component a) has an epoxy equivalent weight of at least 300g/eq,
and/or
**in that** the component b) has an epoxy equivalent weight of at least 190g/eq.

4. The composition according to one or more of claims 1 to 3, **characterized in that** the component b) contains or is a novolac resin having an epoxy functionality of at least 3.

5. The composition according to one or more of claims 1 to 4, **characterized in that** the component b) contains or is a phenol-formaldehyde novolac resin and/or a cresolformaldehyde novolac resin.

6. The composition according to one or more of claims 1 to 4, **characterized in that** it contains the following components, based on the mass of all the epoxy resins:
a. 10 - 60 wt.% of an epoxide group-containing reaction product of epichlorohydrin with polypropylene glycol, which reaction product has an epoxy equivalent weight of at least 250g/eq,
b. 15 - 85 wt.% of an epoxide group-containing reaction product of epichlorohydrin with a novolac resin, which reaction product has an epoxy equivalent weight of at least 175g/eq, and
c. 0 - 70 wt.% of an epoxide group-containing reaction product of epichlorohydrin with at least one bisphenol, which reaction product has an epoxy equivalent weight of at least 500g/eq.

7. The composition according to one of claims 1 to 6, **characterized in that** the second component thereof contains or is a curing agent for epoxy resins that is effective in a temperature range of from 0 to 60°C, in particular of from 0 to 25°C.

8. The composition according to one of claims 1 to 7, **characterized in that** the first component contains at least one inorganic and/or organic filler in addition to the mixture of epoxy resins.

9. A dosing system which comprises two separate containers that contain, separately from one another, the first and the second component of the compositions according to one of claims 1 to 8, and a dosing device.

10. The composition according to one of claims 1 to 8, which is formulated as a co-extrudate.

11. A method for joining and/or repairing parts in which, in a first step, the two components of a composition according to one of claims 1 to 8 are mixed together, the resulting application mixture is applied to the overlapping surfaces of the parts to be joined, the parts are subsequently brought into contact with one another, and the application mixture then cures.

## Revendications

1. Composition à deux composants, dont le premier composant est un composé de résines époxy réactives et de manière facultative d'autres composants de formule, qui contient, rapporté à la masse de toutes les résines époxy
a) au moins 10 % en poids d'un produit de réaction contenant des groupes époxy de l'épichlorhydrine avec du polypropylène glycol, présentant un poids équivalent en époxy d'au moins 250 g/eq, ainsi que
b) au moins 10 % en poids d'un produit de réaction contenant des groupes époxy de l'épichlorhydrine avec une résine novolaque, présentant un poids équivalent en époxy d'au moins 175 g/eq,
et dont le second composant contient au moins un agent durcissant contenant des groupes thiol pour les résines époxy, dans laquelle
le premier composant comporte en outre au moins 10 % en poids d'un produit de réaction contenant des groupes époxy de l'épichlorhydrine avec du bisphénol A, présentant un poids équivalent en époxy d'au moins 500 g/eq.

2. Composition selon la revendication 1, **caractérisée en ce que** le second composant contient de plus un agent durcissant contenant des groupes amines pour la résine époxy.

3. Composition selon l'une quelconque des revendications 1 ou 2, **caractérisée en ce que** le composant a) présente un poids équivalent en époxy d'au moins 300 g/eq, et/ou que le composant b) présente un poids équivalent en époxy d'au moins 190 g/eq.

4. Composition selon l'une quelconque ou plusieurs des revendications 1 à 3, **caractérisée en ce que** le composant b) contient ou présente une résine novolaque avec une fonctionnalité époxy d'au moins 3.

5. Composition selon l'une quelconque ou plusieurs des revendications 1 à 4, **caractérisée en ce que** le composant b) contient ou présente une résine phénol-formaldéhyde et/ou une résine novolaque crésol-formaldéhyde.

6. Composition selon l'une quelconque ou plusieurs des revendications 1 à 4, **caractérisée en ce qu'**elle contient, rapportée à la masse de toutes les résines époxy, les composants suivants :
a. 10 à 60 % en poids d'un produit de réaction contenant des groupes époxydes de l'épichlorhydrine avec du propylène glycol, présentant un poids équivalent en époxyde d'au moins 250 g/eq,
b. 15 à 85 % en poids d'un produit de réaction contenant des groupes époxy de l'épichlorhydrine avec une résine novolaque, présentant un poids équivalent en époxy d'au moins 175 g/eq, ainsi que
c. 0 à 70 % en poids d'un produit de réaction contenant des groupes époxy de l'épichlorhydrine avec au moins un bisphénol, présentant un poids équivalent en époxy d'au moins 500 g/eq.

7. Composition selon l'une quelconque des revendications 1 à 6, **caractérisée en ce que** son second composant contient ou présente un agent durcissant pour résine époxy efficace dans une plage de température allant de 0 à 60 °C, notamment de 0 à 25 °C.

8. Composition selon l'une quelconque des revendications 1 à 7, **caractérisée en ce que** le premier composant contient, outre le composé de résines époxy, au moins un agent de charge inorganique et/ou organique.

9. Système de dosage présentant deux récipients séparés, contenant séparément l'un de l'autre le premier et le second composant des compositions selon l'une quelconque des revendications 1 à 8, ainsi qu'un dispositif de dosage.

10. Composition selon l'une quelconque des revendications 1 à 8, produite en tant que coextrudat.

11. Procédé pour joindre et/ou réparer des parties, dans lequel les deux composants d'une composition selon l'une quelconque des revendications 1 à 8 sont mélangés l'un à l'autre au cours d'une première étape, le composé d'utilisation en résultant étant déposé sur les surfaces de chevauchement des parties à joindre, les parties étant ensuite mises en contact l'une avec l'autre, puis le composé d'utilisation durcit.
